# FASCICULE DE BREVET EUROPEEN

(11) **EP 3 380 341 B1**
(45) Date de publication et mention de la délivrance du brevet: **26.08.2020**
(21) Numéro de dépôt: 16815584.4
(22) Date de dépôt: 17.11.2016
(51) Int. Cl.: B60C 1/00, C08L 9/00, C08L 9/06

(54) **PNEUMATIQUE POURVU D'UNE BANDE DE ROULEMENT COMPRENANT UN ELASTOMERE THERMOPLASTIQUE ET UN ELASTOMERE DIENIQUE**
REIFEN MIT EINER LAUFFLÄCHE MIT EINEM THERMOPLASTISCHEN ELASTOMER UN EINEM DIENELASTOMER
TYRE PROVIDED WITH A TREAD COMPRISING A THERMOPLASTIC ELASTOMER AND A DIENE ELASTOMER

(30) Priorité: 24.11.2015 FR 1561303
(43) Date de publication de la demande: 03.10.2018
(73) Titulaire: Compagnie Générale des Etablissements Michelin, 63000 Clermont-Ferrand (FR)
(72) Inventeur: CROCHET, Aurore, 63040 Clermont-Ferrand Cedex 9 (FR); TRIGUEL, Aurélie, 63040 Clermont-Ferrand Cedex 9 (FR)
(74) Mandataire: Wroblewski, Nicolas Paul André
(86) Numéro de dépôt international: PCT/FR2016/052995
(87) Numéro de publication internationale: WO 2017/089682

(56) Documents cités:
- WO-A1-2011/124833
- WO-A1-2012/152686
- WO-A1-2013/074338
- FR-A1- 3 014 738
- FR-A1- 3 014 882

## Description

La présente invention est relative aux pneumatiques munis d'une bande de roulement.

Dans un pneumatique conventionnel, la bande de roulement comprend à titre d'élastomère, des élastomères diéniques. Ce type de bande de roulement est bien connu et décrit dans de nombreux documents.

Dans quelques documents, il a été décrit des bandes de roulement comprenant un mélange d'élastomère diénique et d'élastomère thermoplastique. Par exemple, le document WO 2012/105984 décrit des compositions de bande de roulement comprenant un copolymère styrène-butadiène (SBR), un polybutadiène (BR) et un élastomère thermoplastique styrénique (TPS) insaturé ainsi qu'une charge renforçante pour améliorer la résistance à l'usure des pneumatiques.

Dans le cadre du compromis entre l'amélioration de la résistance au roulement et de l'amélioration de l'adhérence des pneumatiques sur sol mouillé, les demanderesses ont décrit précédemment dans le document WO 2012/152686 un pneumatique muni d'une bande de roulement comprenant au moins un élastomère thermoplastique, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère). En particulier, les demanderesses ont décrit une bande de roulement comprenant comme élastomère thermoplastique le copolymère tribloc styrène-isoprène-styrène (SIS) comme permettant une diminution de la résistance au roulement par rapport aux bandes de roulement de composition classique.

Egalement, les demanderesses ont décrit dans le document WO 2011/107446 un pneumatique muni d'une bande de roulement comprenant un élastomère thermoplastique à blocs polyéthers et blocs polyamides et un élastomère diénique, dans des compositions comprenant de forts taux de charge (110 pce) et de plastifiants (55 pce) pour améliorer la mise en œuvre (processabilité) de ces compositions.

Enfin les demanderesses ont également décrit dans le document WO 2015/091190 des compositions de bande de roulement de pneumatique, comprenant 65 à 110 pce d'un élastomère thermoplastique à bloc polyester aromatique, pour améliorer les performances d'adhérence et de résistance au roulement.

Un objectif constant des manufacturiers de pneumatique est de diminuer la résistance au roulement des pneumatiques, en conservant par ailleurs de bonnes propriétés de rigidité, de tenue thermique et surtout de résistance à l'abrasion, en vue de pneumatique présentant notamment une excellente résistance à l'usure et une résistance au roulement très faible.

A présent, les demanderesses ont trouvé de manière surprenante qu'un pneumatique pourvu d'une bande de roulement comprenant un élastomère thermoplastique spécifique et un élastomère diénique permettait d'utiliser un faible taux de charge renforçante et de plastifiant dans les compositions, et d'obtenir une diminution importante de la résistance au roulement tout présentant une bonne rigidité et une bonne résistance à l'abrasion.

L'invention a donc pour objet un pneumatique comprenant une bande de roulement dont la composition est à base d'au moins un élastomère diénique majoritaire et un élastomère thermoplastique minoritaire, ledit élastomère thermoplastique étant un copolymère bloc comprenant au moins un bloc élastomère de type polyéther et au moins un bloc thermoplastique de type non styrénique, ladite composition comprenant une charge renforçante à un taux inférieur à 80 pce, et ladite composition ne comprenant pas de système plastifiant ou en comprenant moins de 20 pce.

Préférentiellement, l'invention concerne un pneumatique tel que défini ci-dessus, dans lequel le taux de l'élastomère diénique dans la composition est compris dans un domaine allant de 55 à 95 pce et le taux de l'élastomère thermoplastique est compris dans un domaine allant de 5 à 45 pce.

Préférentiellement également, l'invention concerne un pneumatique tel que défini ci-dessus, dans lequel dans lequel la masse moléculaire moyenne en nombre de l'élastomère thermoplastique est comprise entre 30 000 et 500 000 g/mol.

De préférence, l'invention concerne un pneumatique tel que défini ci-dessus, dans lequel le ou les blocs élastomères du copolymère bloc sont choisis parmi les polyéthers ayant une température de transition vitreuse inférieure à 25°C. De préférence, le ou les blocs thermoplastiques non styréniques sont choisis dans le groupe constitué par les polyamides, les polyesters et les mélanges de ces derniers, et plus préférentiellement dans le groupe constitué par les polyamides PA6, PA11, PA12, les polyesters de type PET, PBT et les mélanges de ces derniers. Préférentiellement, la fraction de bloc thermoplastique non styrénique dans le copolymère bloc est comprise dans un domaine allant de 5 à 70 %.

De préférence également, l'invention concerne un pneumatique tel que défini ci-dessus, dans lequel le ou les blocs élastomères polyéthers sont choisis dans le groupe constitué par les polytétraméthylène glycol (PTMG), les polyéthylènes glycols (PEG), polypropylène éther glycol (PPG), le polyhexaméthylène éther glycol, le polytriméthylenether glycol (PO3G), le poly(3-alkyltétrahydrofurane), et les mélanges de ces derniers ; de préférence dans le groupe constitué par les polytétraméthylène glycol (PTMG), les polyéthylènes glycols (PEG), et les mélanges de ces derniers.

De manière préférentielle, l'invention concerne un pneumatique tel que défini ci-dessus, dans lequel le taux d'élastomère diénique est compris dans un domaine allant de 60 à 95 pce et le taux d'élastomère thermoplastique est compris dans un domaine allant de 5 à 40 pce ; préférentiellement, le taux d'élastomère diénique est compris dans un domaine allant de 70 à 95 pce et le taux d'élastomère thermoplastique est compris dans un domaine allant de 5 à 30 pce.

De préférence, l'invention concerne un pneumatique tel que défini ci-dessus, dans lequel la composition de la bande de roulement comprend un taux inférieur à 60 pce de charge renforçante, préférentiellement le taux de charge renforçante est compris dans un domaine allant de 3 à 50 pce, de préférence de 5 à 40 pce. De préférence, la charge renforçante est du noir de carbone et/ou de la silice. Préférentiellement, la charge renforçante majoritaire est de la silice. Alternativement et préférentiellement également, la charge renforçante majoritaire est du noir de carbone.

De manière préférée, l'invention concerne un pneumatique tel que défini ci-dessus, dans lequel la composition de la bande de roulement ne comprend pas de système plastifiant ou en comprend avec un taux total de plastifiant inférieur à 15 pce. De préférence, la composition de la bande de roulement ne comprend pas de système plastifiant ou en comprend avec un taux total de plastifiant inférieur à 10 pce, de préférence inférieur à 5 pce.

Préférentiellement, l'invention concerne un pneumatique tel que défini ci-dessus, dans lequel la composition de la bande de roulement comprend en outre un système de réticulation.

L'invention concerne plus particulièrement les pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, thermoplastiques et non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Enfin, lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

### 1. Composition de la bande de roulement

La composition de la bande de roulement du pneumatique selon l'invention a pour caractéristiques essentielles d'être à base d'au moins un élastomère diénique majoritaire et un élastomère thermoplastique minoritaire, ledit élastomère thermoplastique étant un copolymère bloc comprenant au moins un bloc élastomère de type polyéther et au moins un bloc thermoplastique de type non styrénique, ladite composition comprenant une charge renforçante à un taux inférieur à 80 pce, et ladite composition ne comprenant pas de système plastifiant ou en comprenant moins de 20 pce.

### 1.1 Elastomère thermoplastique (TPE) spécifique à bloc élastomère polyéther et à bloc thermoplastique non styrénique

De manière générale, les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

Pour les besoins de l'invention, ledit élastomère thermoplastique spécifique est un copolymère bloc comprenant au moins un bloc élastomère de type polyéther et au moins un bloc thermoplastique de type non styrénique (TPNS). Cet élastomère est aussi noté TPE à blocs polyéther et TPNS dans la suite de la demande, Dans ce qui suit, lorsqu'il est fait référence à un bloc polyéther, il s'agit donc d'un bloc élastomérique majoritairement (c'est-à-dire à plus de 50% en poids, de préférence à plus de 80 % en poids) composé d'un polymère issu de la polymérisation de monomère de type éther, et, lorsqu'il est fait référence à un bloc non styrénique, il s'agit d'un bloc composé majoritairement (c'est-à-dire à plus de 50% en poids, de préférence à plus de 80 % en poids) d'un polymère issu de la polymérisation de monomère autre que les composés styréniques (c'est à dire le styrène et les styrènes substitués et/ou fonctionnalisés).

### 1.1.1. Structure du TPE à blocs polyéther et TPNS

La masse moléculaire moyenne en nombre (notée Mn) du TPE à blocs polyéther et TPNS est préférentiellement comprise entre 30 000 et 500 000 g/mol, plus préférentiellement comprise entre 40 000 et 400 000 g/mol. Ainsi, on a constaté qu'une valeur comprise dans un domaine de 50 000 à 300 000 g/mol et mieux, de 60 000 à 150 000 était particulièrement bien adaptée, notamment à une utilisation du TPE à blocs polyéther et TPNS dans une composition pour bande de roulement de pneumatique.

La masse moléculaire moyenne en nombre (Mn) de l'élastomère TPE à blocs polyéther et TPNS est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE à blocs polyéther et TPNS est de préférence inférieure à 3 ; plus préférentiellement inférieure à 2 et encore plus préférentiellement inférieure à 1,5.

De manière connue, les TPE à blocs polyéther et TPNS présentent deux pics de température de transition vitreuse (Tg, mesurée selon ASTM D3418), la température la plus basse étant relative à la partie élastomère polyéther du TPE à blocs polyéther et TPNS, et la température la plus haute étant relative à la partie thermoplastique non styrénique du TPE à blocs polyéther et TPNS. Ainsi, les blocs souples polyéther des TPE à blocs polyéther et TPNS se définissent par une Tg inférieure à la température ambiante (25°C), tandis que les blocs rigides TPNS ont une Tg supérieure à 80°C.

Dans la présente demande, lorsqu'il est fait référence à la température de transition vitreuse du TPE à blocs polyéther et TPNS, il s'agit de la Tg relative au bloc élastomère polyéther. Le TPE à blocs polyéther et TPNS présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la Tg du TPE à blocs polyéther et TPNS est plus préférentiellement encore inférieure ou égale à -10°C. De manière préférentielle également, la Tg du TPE à blocs polyéther et TPNS est supérieure à -100°C.

Selon une première variante, le TPE à blocs polyéther et TPNS se présente sous une forme linéaire. Par exemple, le TPE à blocs polyéther et TPNS est un copolymère dibloc : bloc polyéther / bloc TPNS. Le TPE à blocs polyéther et TPNS peut aussi être un copolymère tribloc : bloc polyéther / bloc TPNS / bloc polyéther, c'est-à-dire un bloc élastomère central et de deux blocs thermoplastiques terminaux, à chacune des deux extrémités du bloc élastomère. Egalement, le TPE à blocs polyéther et TPNS multibloc peut être un enchaînement linéaire de blocs élastomères polyéther - blocs thermoplastiques non styréniques.

Selon une autre variante de l'invention, le TPE à blocs polyéther et TPNS utile pour les besoins de l'invention se présente sous une forme étoilée à au moins trois branches. Par exemple, le TPE à blocs polyéther et TPNS peut alors se composer d'un bloc élastomère polyéther étoilé à au moins trois branches et d'un bloc thermoplastique TPNS, situé à l'extrémité de chacune des branches du bloc élastomère polyéther. Le nombre de branches de l'élastomère central peut varier, par exemple de 3 à 12, et de préférence de 3 à 6.

Selon une autre variante de l'invention, le TPE à blocs polyéther et TPNS se présente sous une forme branchée ou dendrimère. Le TPE à blocs polyéther et TPNS peut alors se composer d'un bloc élastomère polyéther branché ou dendrimère et d'un bloc thermoplastique TPNS, situé à l'extrémité des branches du bloc élastomère dendrimère.

### 1.1.2. Nature des blocs élastomères

Les blocs élastomères du TPE à blocs polyéther et TPNS pour les besoins de l'invention, peuvent être tous les élastomères de type polyéther connus de l'homme de l'art.

La fraction de bloc élastomère polyéther dans le TPE à blocs polyéther et TPNS est comprise dans un domaine allant de 1 à 95 %, préférentiellement de 10 à 92 %, plus préférentiellement de 30 à 90%.

Ces blocs polyéther possèdent de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg des blocs polyéther est supérieure à -100°C. Conviennent notamment, les blocs polyéther ayant une Tg comprise entre 20°C et -70°C et plus particulièrement entre 0°C et -50°C.

Au sens de la présente invention, les blocs polyéther peut être composée par des monomères choisis parmi les alcools ou éther cycliques, préférentiellement les alcools ou éthers cycliques aliphatiques, tels que par exemple l'éthanol ou le tétrahydrofurane. Parmi les polyéthers, on choisira préférentiellement ceux choisis dans le groupe constitué par les polytétraméthylène glycol (PTMG), les polyéthylènes glycols (PEG), polypropylène éther glycol (PPG), le polyhexaméthylène éther glycol, le polytriméthylenether glycol (PO3G), le poly(3-alkyltétrahydrofurane), et leurs mélanges. Très préférentiellement, le polyéther est choisi dans le groupe constitué par les polytétraméthylène glycol (PTMG), les polyéthylènes glycols (PEG) et leurs mélanges.

Selon un mode de réalisation préférentiel de l'invention, les blocs élastomères du TPE à blocs polyéther et TPNS présentent au total, une masse moléculaire moyenne en nombre ("Mn") allant de 25 000 g/mol à 350 000g/mol, de préférence de 35 000 g/mol à 250 000 g/mol de manière à conférer au TPE à blocs polyéther et TPNS de bonnes propriétés élastomériques et une tenue mécanique suffisante et compatible avec l'utilisation en bande de roulement de pneumatique.

Le bloc élastomère peut également être constitué de plusieurs blocs élastomères tels que définis ci-dessus.

### 1.1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en œuvre industrielle (transformation). Dans le cas d'un polymère (ou d'un bloc de polymère) amorphe, la température de mise en œuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en œuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise œuvre.

Pour les besoins de l'invention, les élastomères TPE à blocs polyéther et TPNS comprennent un ou plusieurs bloc(s) thermoplastique(s) non styrénique(s) ayant de préférence une Tg (ou Tf, le cas échéant) supérieure ou égale à 80°C et constitué(s) à partir de monomères non styréniques polymérisés (TPNS). Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La fraction de bloc TPNS dans le TPE à blocs polyéther et TPNS est comprise dans un domaine allant de 5 à 70 %, préférentiellement de 8 à 60 %, plus préférentiellement de 10 à 50%.

Les blocs thermoplastiques du TPE à blocs polyéther et TPNS sont des blocs non styréniques, c'est-à-dire de préférence des thermoplastiques issus de la polymérisation de tout monomère approprié et ne comprenant pas de monomères styréniques ou moins de 5%.

De manière préférentielle, les blocs thermoplastiques du TPE à blocs polyéther et TPNS sont des blocs choisis parmi les blocs polyamides, polyesters, et leurs mélanges. De manière très préférentielle, les blocs thermoplastiques du TPE à blocs polyéther et TPNS sont des blocs polyamides et/ou polyesters. Très préférentiellement, les blocs thermoplastiques du TPE à blocs polyéther et TPNS sont choisis dans le groupe constitué par les polyamides de type PA6, PA11 ou PA12, ou les polyesters de type PET ou PBT et les mélanges de ces derniers.

Les TPE à blocs polyéther et TPNS particuliers dans lesquels les blocs thermoplastiques non styréniques sont des polyamides sont usuellement notés TPE-A ou TPA (copolyamide thermoplastique) ou encore PEBA (copolyéther bloc amide), et ils sont particulièrement préférés pour les besoins de l'invention.

Les TPE à blocs polyéther et TPNS particuliers dans lesquels les blocs thermoplastiques non styréniques sont des polyesters sont usuellement notés TPE-E ou TPC (copolyester thermoplastique) ou encore COPE (copolymère bloc éther-ester), et ils sont également particulièrement préférés pour les besoins de l'invention.

Selon l'invention, les blocs thermoplastiques du TPE à blocs polyéther et TPNS présentent au total, une masse moléculaire moyenne en nombre ("Mn") allant de 5 000 g/mol à 150 000g/mol, de manière à conférer au TPE à blocs polyéther et TPNS de bonnes propriétés élastomériques et une tenue mécanique suffisante et compatible avec l'utilisation en bande de roulement de pneumatique.

Le bloc thermoplastique peut également être constitué de plusieurs blocs thermoplastiques tels que définis ci-dessus.

### 1.1.4. Exemples de TPE à blocs polyéther et TPNS

A titre d'exemples d'élastomères TPE à blocs polyéther et TPNS commercialement disponibles, on peut citer les élastomères PEBA de type « PEBAX », commercialisés par la société Arkema, par exemple sous la dénomination « PEBAX 4033 », « PEBAX 6333 » ou encore les élastomères COPE de type « Pelprene P », commercialisés par la société Toyobo, par exemple sous la dénomination « Pelprene P40B ».

### 1.1.5. Quantité de TPE à blocs polyéther et TPNS

Dans la composition de bande de roulement du pneumatique de l'invention, l'élastomère TPE (c'est à dire le ou les élastomères TPE) à blocs polyéther et TPNS est minoritaire, il représente de préférence un taux compris dans un domaine allant de 5 à 45 pce, plus préférentiellement de 5 à 40 pce. De manière encore plus préférée, la composition comprend un taux d'élastomère allant de 5 à 30 pce. En effet, avec une quantité d'élastomère TPE à blocs polyéther et TPNS inférieure à 5 pce l'effet sur la diminution de la résistance au roulement est peu notable tandis qu'au-delà de 45 pce d'élastomère TPE à blocs polyéther et TPNS, la composition prend une nature plus thermoplastique avec pour conséquence une forte évolution des propriétés avec la température.

### 1.2 Elastomère Diénique

La composition de la bande de roulement selon l'invention, comporte au moins un (c'est-à-dire un ou plusieurs) caoutchouc diénique. Le ou les élastomère(s) diénique(s) sont majoritaires dans la composition. Préférentiellement, le taux total d'élastomère diénique est compris entre 55 et 95 pce, de préférence dans un domaine variant de 60 à 95 pce, préférentiellement de 70 à 95 pce.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a)- tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la bande de roulement du pneumatique selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

### 1.3. Charge nanométrique ou renforçante

La composition de la bande de roulement selon l'invention comprend une charge renforçante, à un taux inférieur à 80 pce.

On peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice. Préférentiellement pour les besoins de l'invention, la charge renforçante majoritaire pourra être de la silice, ou alternativement du noir de carbone.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineux, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la composition (noir de carbone et/ou charge inorganique renforçante telle que silice) est compris dans un domaine de 0 à 20%, ce qui correspond à un taux de 0 à 50 pce pour une composition sans plastifiant. Préférentiellement la composition comprend moins de 60 pce (notamment entre 1 à 60 pce), plus préférentiellement un taux compris dans un domaine allant de 3 à 50 pce, mieux de 5 à 40 pce.

### 1.4. Plastifiants

Le ou les élastomères décrits précédemment sont suffisants à eux seuls pour que soit utilisable la bande de roulement selon l'invention.

Ainsi, la composition élastomère de l'invention, précédemment décrite ne comporte pas d'agent plastifiant de type huile ou résine thermoplastique, et, si elle en comporte, elle en comporte moins de 20 pce (notamment entre 0,5 et 20 pce), de préférence moins de 15 pce (notamment entre 0,5 et 15 pce), plus préférentiellement moins de 10 pce (notamment entre 0,5 et 10 pce), mieux, moins de 5 pce (notamment entre 0,5 et 5 pce). De manière préférentielle également la composition ne comprend pas d'agent plastifiant. De manière connue de l'homme du métier, on appelle agent plastifiant une huile (ou huile plastifiante ou huile d'extension) ou une résine plastifiante dont la fonction est de faciliter la mise en œuvre de la bande de roulement, particulièrement son intégration au pneumatique par un abaissement du module et une augmentation du pouvoir tackifiant.

On peut utiliser toute huile, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier.

L'homme du métier saura, à la lumière de la description et des exemples de réalisation qui suivent, ajuster la quantité de plastifiant en fonction de l'élastomère TPE à blocs polyéther et TPNS utilisé (comme indiqué précédemment) ; des conditions particulières d'usage du pneumatique muni de la bande de roulement, et notamment en fonction de l'objet pneumatique dans lequel elle est destinée à être utilisée.

### 1.5. Additifs divers

Le ou les élastomères thermoplastiques décrits précédemment sont suffisants à eux seuls pour que soit utilisable la bande de roulement selon l'invention.

Toutefois, selon un mode de réalisation préférentiel de l'invention, la composition élastomère précédemment décrite peut comporter également, les divers additifs usuellement présents dans les bandes de roulements connues de l'homme du métier. On choisira par exemple un ou plusieurs additifs choisis parmi les agents de protection tels que antioxydants ou antiozonants, anti-UV, les divers agents de mise en œuvre ou autres stabilisants, ou encore les promoteurs aptes à favoriser l'adhésion au reste de la structure de l'objet pneumatique.

Egalement et à titre optionnel, la composition de la bande de roulement de l'invention peut contenir un système de réticulation connu de l'homme du métier, tel qu'un système de vulcanisation comprenant du soufre ou un agent donneur de soufre, et optionnellement, un ou plusieurs accélérateurs et/ ou activateurs de vulcanisation.

### 2. Préparation

Les compositions de bande de roulement pour le pneumatique selon l'invention sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301. Les élastomères TPE à blocs polyéther et TPNS sont introduits lors de la première étape, directement sous leur forme commerciale, par exemple sous la forme de billes ou de granulés.

La bande de roulement pour le pneumatique selon l'invention est ensuite extrudée de façon classique, afin de réaliser le profilé. La bande de roulement est ensuite sculptée dans le moule de cuisson du pneumatique.

Cette bande de roulement peut-être montée sur un pneumatique de manière classique, ledit pneumatique comprenant en plus de la bande de roulement selon l'invention, un sommet, deux flancs et deux bourrelets, une armature de carcasse ancrée aux deux bourrelets, et une armature de sommet.

### EXEMPLES DE RÉALISATION DE L'INVENTION

Des compositions de bande de roulement pour pneumatique selon l'invention ont été préparées comme indiqué précédemment.

### Tests effectués au laboratoire sur les compositions

### - Propriétés dynamiques

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, selon la norme ASTM D 1349 - 99, à 40°C. On effectue un balayage en amplitude de déformation crête à crête de 0,1 à 100%, (cycle aller), puis de 100% à 1 % (cycle retour), à 10 Hz. Les résultats exploités sont le module complexe de cisaillement dynamique (G*) et le facteur de perte (tan δ). Pour le cycle retour, on indique la valeur maximale de tan δ observée (tan(δ)max), ainsi que l'écart de module complexe (ΔG*) entre les valeurs à 0,1% et à 100% de déformation (effet Payne).

La rigidité est représentée par le module G*50% retour en MPa. Plus la valeur est basse, plus la composition aura une rigidité faible. Pour plus de lisibilité les résultats seront indiqués selon la performance, en base 100, la valeur 100 étant attribuée au témoin. Un résultat inférieur à 100 indiquant une diminution de la rigidité, et inversement, un résultat supérieur à 100, indiquera une augmentation de la rigidité.

L'hystérèse est représentée par le tan(δ)max retour. Plus la valeur est basse, plus la composition aura une hystérèse faible et donc une résistance au roulement faible. Pour plus de lisibilité les résultats seront indiqués selon la performance, en base 100, la valeur 100 étant attribuée au témoin. Un résultat inférieur à 100 indiquant une diminution de la performance de résistance au roulement (augmentation de la valeur de tan(δ) max à 40°C), et inversement, un résultat supérieur à 100, indiquera une augmentation de la performance (diminution de la valeur de tan(δ)max à 40°C).

### - Résistance à l'abrasion

L'expérience d'abrasion peut par exemple être conduite sur un abrasimètre LAT100, dispositif connu de l'homme de l'art, dont le résultat est une perte de masse par km. L'éprouvette cylindrique est conforme à la pratique usuelle. Elle est appliquée avec une charge fixe de par exemple 75N contre une piste circulaire. Cette éprouvette cylindrique est soumise à une dérive de 16 degrés ou 13 ou 9, mais on lui préfèrera une dérive de 5,5 degrés. La vitesse de rotation du disque abrasif est de 40, 25km/h mais on lui préfèrera une valeur de 12km/h.

Pour plus de lisibilité les résultats seront indiqués selon la performance, en base 100, la valeur 100 étant attribuée au témoin. Un résultat inférieur à 100 indiquant une diminution de la résistance à l'abrasion, et inversement, un résultat supérieur à 100, indiquera une augmentation de la résistance à l'abrasion.

### - Tenue thermique

La tenue thermique est représentée par le ratio de module à 190°C et 40°C obtenue sur la courbe G* = f(T) obtenue par une éprouvette de mesure dynamique en cisaillement connu de l'homme de l'art sur un viscoanalyseur (Metravib VA4000) selon une expérience de mesure de propriétés dynamique similaire à celle décrite plus haut, avec un balayage en température.

Pour plus de lisibilité les résultats seront indiqués selon la performance, en base 100, la valeur 100 étant attribuée au témoin. Un résultat inférieur à 100 indiquant une diminution de la tenue thermique, et inversement, un résultat supérieur à 100, indiquera une augmentation de la tenue thermique.

### EXEMPLE

Des compositions de bande de roulement de pneumatique conformes à l'invention (C1, C2 et C3) ont étés préparées comme indiqué précédemment et comparée à deux témoins : une composition usuelle de bande de roulement de pneumatique témoin (A0), et une composition utilisant un TPE différent de celui de l'invention. Les compositions de ces bandes de roulement sont présentées dans le tableau 1 ci-dessous.

**Tableau 1**

| **Compositions** | **T1** | **T2** | **C1** | **C2** | **C3** |
|---|---|---|---|---|---|
| **BR (1)** | 15 | - | - | - | - |
| **SBR (2)** | 85 | 60 | 90 | 90 | 90 |
| **TPE 1 (3)** | - | 40 | - | - | - |
| **TPE 2 (4)** | - | - | 10 | - | - |
| **TPE 3 (5)** | - | - | - | 10 | - |
| **TPE 4 (6)** | - | - | - | - | 10 |
| **Noir de carbone (7)** | 5 | 5 | 5 | 5 | 5 |
| **Silice (8**) | 70 | 26 | 26 | 26 | 26 |
| **Agent de couplage (9)** | 5,6 | 2,1 | 2,1 | 2,1 | 2,1 |
| **Huile (10)** | 2 | - | - | - | - |
| **Resine (11)** | 15 | - | - | - | - |
| **Antioxydants (12)** | 3,5 | 3,5 | 3,5 | 3,5 | 3,5 |
| **Diphénylguanidine (13)** | 1,3 | 0,5 | 0,5 | 0,5 | 0,5 |
| **Acide stearique (14)** | 2 | 2 | 2 | 2 | 2 |
| **ZnO (15)** | 0,6 | 0,6 | 0,6 | 0,6 | 0,6 |
| **Accélérateur (16)** | 1,7 | 1,7 | 1,7 | 1,7 | 1,7 |
| **Soufre** | 1 | 1 | 1 | 1 | 1 |

| | | | | | |
|---|---|---|---|---|---|
| (1) BR avec 4% de motif 1,2 et 93% de motif 1,4-cis (Tg = -106°C ) ; (2) SSBR solution (taux exprimés en SBR sec : 26% de styrène, 24 % des motifs polybutadiène en 1-2 et 50% des motifs polybutadiène en 1-4 trans (Tg = - 25°C) ; (3) TPE 1 : SOE « SOE L606 » de la société Asahi Kasei ; (4) TPE 2 : PEBA « PEBAX 4033 » de la société Arkema ; (5) TPE 3 : PEBA « PEBAX 6333 » de la société Arkema ; (6) TPE 4 : COPE « Pelprène P40B » commercialisé par la société Toyobo ; (7) Noir de carbone N234 ; (8) Silice « Zeosil 1165MP » de la société Solvay-Rhodia ; (9) Agent de couplage TESTP « Si69 » de la société Evonik-Degussa ; (10) Huile MES « Catenex SNR » de la société Shell ; (11) Résine C5/C9 « CrayValley Wingtack » de la société STS ; (12) N-1,3-diméthylbutyl-N-phénylparaphénylènediamine « Santoflex 6-PPD » de la société Flexsys et Cire anti-ozone ; (13) Diphénylguanidine « Perkacit DPG » de la société Flexsys ; (14) Stéarine « Pristerene » de la société Uniquema; (15) Oxyde de zinc de grade industriel - société Umicore ; (16) N-cyclohexyl-2-benzothiazyl-sulfénamide « Santocure CBS » de la société Flexsys. | | | | | |

Les performances de l'invention ont été évaluées au laboratoire, et les résultats sont présentés au tableau 2 ci-dessous.

**Tableau 2**

| **Performances (base 100)** | **T1** | **T2** | **C1** | **C2** | **C3** |
|---|---|---|---|---|---|
| **Rigidité** | 133 | 100 | 99 | 95 | 80 |
| **Hystérèse** | 51 | 100 | 93 | 91 | 91 |
| **Résistance abrasion** | 246 | 100 | 136 | 180 | 124 |
| **Tenue Thermique** | 145 | 100 | 171 | * | * |

| | | | | | |
|---|---|---|---|---|---|
| * : non mesuré | | | | | |

Les résultats présentés au tableau 2 mettent en évidence que les compositions selon l'invention permettent, avec un taux de charge réduit dans la composition grâce au remplacement une partie de l'élastomère diénique par un élastomère thermoplastique, une amélioration notable de l'équilibre des performances entre la rigidité, l'hystérèse, la résistance à l'abrasion et la tenue thermique (C1 à C3) qu'on peut attendre pour une composition utilisée en pneumatique. Par ailleurs, il est surprenant au vu de l'état de la technique depuis de très nombreuses années, que l'utilisation d'un TPE en coupage avec un élastomère diénique, permettent de diminuer notablement la quantité de charge et même de se passer de plastifiant dans une composition pour pneumatique, par exemple pour une bande de roulement, permettant ainsi une économie de moyen et une facilité de mise en œuvre.

## Revendications

1. Pneumatique comprenant une bande de roulement dont la composition est à base d'au moins un élastomère diénique majoritaire, un élastomère thermoplastique minoritaire, ledit élastomère thermoplastique étant un copolymère bloc comprenant au moins un bloc élastomère de type polyéther et au moins un bloc thermoplastique de type non styrénique, ladite composition comprenant une charge renforçante à un taux inférieur à 80 pce, et ladite composition ne comprenant pas de système plastifiant ou en comprenant moins de 20 pce.

2. Pneumatique selon la revendication 1, dans lequel le taux de l'élastomère diénique dans la composition est compris dans un domaine allant de 55 à 95 pce et le taux de l'élastomère thermoplastique est compris dans un domaine allant de 5 à 45 pce.

3. Pneumatique selon l'une des revendications 1 ou 2 dans lequel la masse moléculaire moyenne en nombre de l'élastomère thermoplastique est comprise entre 30 000 et 500 000 g/mol.

4. Pneumatique selon l'une quelconque des revendications précédentes dans lequel le ou les blocs élastomères du copolymère bloc sont choisis parmi les polyéthers ayant une température de transition vitreuse inférieure à 25°C, mesurée par DSC selon la norme ASTM D3418 de 1999.

5. Pneumatique selon l'une quelconque des revendications précédentes dans lequel le ou les blocs thermoplastiques non styréniques sont choisis dans le groupe constitué par les polyamides, les polyesters et les mélanges de ces derniers.

6. Pneumatique selon la revendication précédente dans lequel le ou les blocs thermoplastiques non styréniques sont choisis dans le groupe constitué par les polyamides PA6, PA11, PA12, les polyesters de type PET, PBT et les mélanges de ces derniers.

7. Pneumatique selon l'une quelconque des revendications précédentes dans lequel la fraction de bloc thermoplastique non styrénique dans le copolymère bloc est comprise dans un domaine allant de 5 à 70 %.

8. Pneumatique selon l'une quelconque des revendications précédentes dans lequel le ou les blocs élastomères polyéthers sont choisis dans le groupe constitué par les polytétraméthylène glycol (PTMG), les polyéthylènes glycols (PEG), polypropylène éther glycol (PPG), le polyhexaméthylène éther glycol, le polytriméthylenether glycol (PO3G), le poly(3-alkyltétrahydrofurane), et les mélanges de ces derniers ; de préférence dans le groupe constitué par les polytétraméthylène glycol (PTMG), les polyéthylènes glycols (PEG), et les mélanges de ces derniers.

9. Pneumatique selon l'une quelconque des revendications précédentes, dans lequel le taux d'élastomère diénique est compris dans un domaine allant de 60 à 95 pce et le taux d'élastomère thermoplastique est compris dans un domaine allant de 5 à 40 pce.

10. Pneumatique selon l'une quelconque des revendications précédentes, dans lequel la composition de la bande de roulement comprend un taux inférieur à 60 pce de charge renforçante.

11. Pneumatique selon la revendication précédente, dans lequel le taux de charge renforçante est de 3 à 50 pce, de préférence de 5 à 40 pce.

12. Pneumatique selon l'une quelconque des revendications précédentes, dans lequel la charge renforçante est du noir de carbone et/ou de la silice.

13. Pneumatique selon l'une quelconque des revendications précédentes, dans lequel la composition de la bande de roulement ne comprend pas de système plastifiant ou en comprend avec un taux total de plastifiant inférieur à 15 pce.

14. Pneumatique selon la revendication précédente, dans lequel la composition de la bande de roulement ne comprend pas de système plastifiant ou en comprend avec un taux total de plastifiant inférieur à 10 pce, de préférence inférieur à 5 pce.

15. Pneumatique selon la revendication précédente, dans lequel la composition de la bande de roulement comprend en outre un système de réticulation.

## Patentansprüche

1. Reifen mit einer Lauffläche, deren Zusammensetzung auf mindestens einem hauptsächlichen Dienelastomer und einem nebensächlichen thermoplastischen Elastomer basiert, wobei es sich bei dem thermoplastischen Elastomer um ein Blockcopolymer mit mindestens einem Elastomerblock vom Polyether-Typ und mindestens einem thermoplastischen Block vom Nicht-Styrol-Typ handelt, wobei die Zusammensetzung einen verstärkenden Füllstoff in einem Gehalt von weniger als 80 phe umfasst und die Zusammensetzung kein Weichmachersystem bzw. weniger als 20 phe Weichmachersystem umfasst.

2. Reifen nach Anspruch 1, wobei der Gehalt des Dienelastomers in der Zusammensetzung in einem Bereich von 55 bis 95 phe liegt und der Gehalt des thermoplastischen Elastomers in einem Bereich von 5 bis 45 phe liegt.

3. Reifen nach Anspruch 1 oder 2, wobei die zahlenmittlere Molmasse des thermoplastischen Elastomers zwischen 30.000 und 500.000 g/mol liegt.

4. Reifen nach einem der vorhergehenden Ansprüche, wobei der Elastomerblock bzw. die Elastomerblöcke des Copolymers aus Polyethern mit einer durch DSC gemäß der ASTM-Norm D3418 von 1999 gemessenen Glasübergangstemperatur von weniger als 25 °C ausgewählt ist bzw. sind.

5. Reifen nach einem der vorhergehenden Ansprüche, wobei der thermoplastische Nicht-Styrol-Block bzw. die thermoplastischen Nicht-Styrol-Blöcke aus der Gruppe bestehend aus Polyamiden, Polyestern und Mischungen davon ausgewählt ist bzw. sind.

6. Reifen nach dem vorhergehenden Anspruch, wobei der thermoplastische Nicht-Styrol-Block bzw. die thermoplastischen Nicht-Styrol-Blöcke aus der Gruppe bestehend aus Polyamiden PA6, PA11 und PA12, Polyestern vom PET- und PBT-Typ und Mischungen davon ausgewählt ist bzw. sind.

7. Reifen nach einem der vorhergehenden Ansprüche, wobei der Anteil des thermoplastischen Nicht-Styrol-Blocks in dem Blockcopolymer im Bereich von 5 bis 70 % liegt.

8. Reifen nach einem der vorhergehenden Ansprüche, wobei der Polyether-Elastomerblock bzw. die Polyether-Elastomerblöcke aus der Gruppe bestehend aus Polytetramethylenglykolen (PTMG), Polyethylenglykolen (PEG), Polypropylenetherglykol (PPG), Polyhexamethylenetherglykol, Polytrimethylenetherglkyol (PO3G), Poly(3-alkyltetrahydrofuran) und Mischungen davon, vorzugsweise aus der Gruppe bestehend aus Polytetramethylenglykol (PTMG), Polyethylenglykolen (PEG) und Mischungen davon, ausgewählt ist bzw. sind.

9. Reifen nach einem der vorhergehenden Ansprüche, wobei der Gehalt an Dienelastomer in einem Bereich von 60 bis 95 phe liegt und der Gehalt an thermoplastischem Elastomer in einem Bereich von 5 bis 40 phe liegt.

10. Reifen nach einem der vorhergehenden Ansprüche, wobei die Zusammensetzung der Lauffläche einen Gehalt von weniger als 60 phe verstärkendem Füllstoff umfasst.

11. Reifen nach dem vorhergehenden Anspruch, wobei der Gehalt an verstärkendem Füllstoff 3 bis 50 phe, vorzugsweise 5 bis 40 phe, beträgt.

12. Reifen nach einem der vorhergehenden Ansprüche, wobei es sich bei dem verstärkenden Füllstoff um Ruß und/oder Kieselsäure handelt.

13. Reifen nach einem der vorhergehenden Ansprüche, wobei die Zusammensetzung der Lauffläche kein Weichmachersystem bzw. ein Weichmachersystem mit einem Gesamtgehalt an Weichmacher von weniger als 15 phe umfasst.

14. Reifen nach dem vorhergehenden Anspruch, wobei die Zusammensetzung der Lauffläche kein Weichmachersystem bzw. ein Weichmachersystem mit einem Gesamtgehalt an Weichmacher von weniger als 10 phe, vorzugsweise weniger als 5 phe, umfasst.

15. Reifen nach dem vorhergehenden Anspruch, wobei die Zusammensetzung der Lauffläche außerdem ein Vernetzungssystem umfasst.

## Claims

1. Tyre comprising a tread, the composition of which is based on at least a predominant diene elastomer and a minor thermoplastic elastomer, the said thermoplastic elastomer being a block copolymer comprising at least one elastomer block of polyether type and at least one thermoplastic block of non-styrene type, the said composition comprising a reinforcing filler at a content of less than 80 phr and the said composition not comprising a plasticizing system or comprising less than 20 phr thereof.

2. Tyre according to Claim 1, wherein the content of the diene elastomer in the composition is within a range extending from 55 to 95 phr and the content of the thermoplastic elastomer is within a range extending from 5 to 45 phr.

3. Tyre according to Claim 1 or 2, wherein the number-average molecular weight of the thermoplastic elastomer is between 30 000 and 500 000 g/mol.

4. Tyre according to any one of the preceding claims, wherein the elastomer block or blocks of the block copolymer are chosen from polyethers having a glass transition temperature of less than 25°C, measured by DSC according to Standard ASTM D3418 of 1999.

5. Tyre according to any one of the preceding claims, wherein the thermoplastic non-styrene block or blocks are selected from the group consisting of polyamides, polyesters and the mixtures of these.

6. Tyre according to the preceding claim, wherein the thermoplastic non-styrene block or blocks are selected from the group consisting of polyamides PA6, PA11 and PA12, polyesters of PET and PBT type and the mixtures of these.

7. Tyre according to any one of the preceding claims, wherein the fraction of thermoplastic non-styrene block in the block copolymer is within a range extending from 5 to 70%.

8. Tyre according to any one of the preceding claims, wherein the polyether elastomer block or blocks are selected from the group consisting of polytetramethylene glycols (PTMGs), polyethylene glycols (PEGs), polypropylene ether glycol (PPG), polyhexamethylene ether glycol, polytrimethylene ether glycol (PO3G), poly(3-alkyltetrahydrofuran) and the mixtures of these, preferably from the group consisting of polytetramethylene glycols (PTMGs), polyethylene glycols (PEGs) and the mixtures of these.

9. Tyre according to any one of the preceding claims, wherein the content of diene elastomer is within a range extending from 60 to 95 phr and the content of thermoplastic elastomer is within a range extending from 5 to 40 phr.

10. Tyre according to any one of the preceding claims, wherein the composition of the tread comprises a content of less than 60 phr of reinforcing filler.

11. Tyre according to the preceding claim, wherein the content of reinforcing filler is from 3 to 50 phr, preferably from 5 to 40 phr.

12. Tyre according to any one of the preceding claims, wherein the reinforcing filler is carbon black and/or silica.

13. Tyre according to any one of the preceding claims, wherein the composition of the tread does not comprise a plasticizing system or comprises it with a total plasticizer content of less than 15 phr.

14. Tyre according to the preceding claim, wherein the composition of the tread does not comprise a plasticizing system or comprises it with a total plasticizer content of less than 10 phr, preferably of less than 5 phr.

15. Tyre according to the preceding claim, wherein the composition of the tread additionally comprises a crosslinking system.
